# EUROPÄISCHE PATENTSCHRIFT

(11) **EP 1 754 896 B1**
(45) Veröffentlichungstag und Bekanntmachung des Hinweises auf die Patenterteilung: **05.03.2008**
(21) Anmeldenummer: 06010332.2
(22) Anmeldetag: 19.05.2006
(51) Int. Cl.: F16B 5/04, F16B 19/06, B62D 27/02

(54) **Verfahren zum Fügen von zwei zumindest abschnittsweise übereinander angeordneten Bauteilen, insbesondere Karosseriebauteilen**
Method for joining at least partially overlapping components, in particular chassis components
Méthode pour l'assemblage d'éléments constitutifs en recouvrement partiel à minima, en particulier d'éléments de carrosserie

(30) Priorität: 16.08.2005 DE 102005038973
(43) Veröffentlichungstag der Anmeldung: 21.02.2007
(73) Patentinhaber: Volkswagen AG, 38436 Wolfsburg (DE)
(72) Erfinder: Graul, Matthias, 38471 Eischott (DE); Amedick, Jürgen, 31224 Peine (DE); Jüttner, Sven, 38444 Wolfsburg (DE)
(74) Vertreter: Scheffler, Jörg

(56) Entgegenhaltungen:
- DE-A1- 19 701 252
- DE-C1- 10 259 334

## Beschreibung

Die Erfindung betrifft ein Verfahren zum Fügen von zwei zumindest abschnittsweise übereinander angeordneten Bauteilen, insbesondere Karosseriebauteilen, gemäß dem Oberbegriff des Anspruchs 1. Ein solches Verfahren ist aus der DE 102 59 334 C1 bekannt.

Zukünftige Stähle für den Karosseriebau zeichnen sich im Vergleich zu konventionellen Stahlwerkstoffen durch hohe Festigkeiten, hohe Duktilitäten und geringe Dichten aus. Hieraus resultiert ein hohes Leichtbaupotential der so genannten hochfesten Stähle, welche eine Zugfestigkeit von mehr als 800 N/mm² aufweisen. Hohe Kohlenstoffäquivalente, Grundwerkstoffhärten sowie Aluminium- bzw. Mangangehalte reduzieren jedoch die Prozesssicherheit von thermischen und mechanischen Fügeverfahren.

Ein mechanisches Fügen von zwei Bauteilen aus einem hochfesten Stahl, bzw. eine Mischbauweise zwischen einem Bauteil aus einem hochfesten Stahl und einem weiteren Bauteil aus einem Kunststoff bzw. einem Leichtmetall, wie beispielsweise Aluminium, Magnesium oder Titan ist auf Grund der oben angeführten Werkstoffeigenschaften des hochfesten Stahls nicht möglich.

Allerdings wird insbesondere im Karosseriebau ein prozesssicheres Fügeverfahren dringend benötigt, um ein hochfestes Stahlbauteil, beispielsweise ein Spaceframe, mit einer Beplankung aus einem Kunststoff oder einem Leichtmetall zu verbinden.

Herkömmliche mechanische Fügeverfahren, wie beispielsweise das Clinchen bzw. Durchsetzfügen, oder das Stanznieten sind aufgrund der genannten Materialeigenschaften des hochfesten Stahls nicht geeignet eine prozesssichere Verbindung zu erzielen.

In DE 197 01 252 A1 wird ein Verfahren beschrieben, bei welchem ein Fügehilfsteil mittels eines Bolzenschussgerätes in die zu fügenden Bleche eingeschossen wird. Das Bolzenschussgerät ist mit handelsüblichen Kartuschen bestückt oder wird mit einem Gas gespeisten Linear-Explosionsmotor betrieben. Dieses Verfahren ist energiegesteuert, dass bedeutet eine vollständige Vernichtung der durch das Bolzenschussgerät zur Verfügung gestellten Energie während der Verbindungsbildung. Die durch das Bolzenschussgerät zur Verfügung gestellte Energie reicht jedoch nicht aus, um einen Fügevorgang von einem Bauteil aus einem hochfesten Stahl und einem weiteren Bauteil prozesssicher durchführen zu können.

Vor diesem Hintergrund liegt der Erfindung die Aufgabe zugrunde, ein Verfahren zur Verfügung zu stellen, durch welches eine prozesssicher Fügeverbindung zwischen einem Bauteil aus einem hochfesten Stahl und einem weiteren Bauteil hergestellt werden kann.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zum Fügen von zwei zumindest abschnittsweise übereinander angeordneten Bauteilen, insbesondere Karosseriebauteilen vorgesehen, wobei zumindest eines der Bauteile einen hochfesten Stahl, insbesondere mit einer Zugfestigkeit von mehr als 800 N/mm², aufweist, bei welchem ein Fügehilfsteil durch einen mit Druckluft beaufschlagten Kolben in die beiden Bauteile, diese zumindest teilweise durchdringend, eingetrieben wird, wobei die Druckluft den Kolben mit einer Geschwindigkeit von mehr als 10m/s bewegt und eine Kolbenbewegung mechanisch und/oder elektronisch begrenzt wird. Durch die hohe Geschwindigkeit des Antriebes wird ausreichend Energie zur Verfügung gestellt, um auch einen hoch- bzw. höchstfesten Stahl mit den eingangs genannten Materialeigenschaften zu durchdringen. Durch die Wegbegrenzung des Kolbens kann die für die Verbindungsbildung benötigte Energie begrenzt und je nach zu fügendem Material bzw. nach zu fügende Bauteildicke entsprechend angepasst werden. Eine vollständige Energievernichtung während der Verbindungsbildung wird durch die Begrenzung des Kolbenweges verhindert. Eine Verformung bzw. Zerstörung des Fügehilfsteils bzw. eine Deformation des Bauteils im Verbindungsbereich wird ebenfalls verhindert. Im Vergleich zu Fügeverfahren, wie beispielsweise dem Stanznieten oder Durchsetzfügen (Clinchen), werden durch das erfindungsgemäße Verfahren die während des Fügevorgangs auftretenden Reaktionskräfte erheblich reduziert. Weiterhin werden durch das Verfahren kurze Taktzeiten ermöglicht, da die Setzzeit bei ca. 0,5 ms liegt. Es können Blechdicken von bis zu 2 mm und darüber hinaus prozesssicher gefügt werden. Bei den hochfesten Stählen handelt es sich um solche Stähle, welche neben der oben angeführten Zugfestigkeit (Rm) von mehr als 800 N/mm² eine Streckgrenze (Rp_{0,2}) von mehr als 500 N/mm² aufweisen, zum Beispiel der Werkstoff 22MnB5. Die Fügehilfsteile können als Nieten, Nägel oder Schrauben aber auch als Funktionselement, beispielsweise als ein Gewindebolzen, ausgebildet sein.

Durch das erfindungsgemäße Verfahren lassen sich auch Fügeverbindungen in Mischbauweisen durchführen, wenn nämlich das zweite Bauteil aus einem Leichtmetall oder aus einem Kunststoff besteht. Diese Mischbauweise ist insbesondere für die Kraftfahrzeugindustrie wegen des vorhandenen Leichtbaupotentials von besonderer Bedeutung.

Eine besonders vorteilhafte Weiterbildung des vorliegenden Verfahrens wird auch dadurch geschaffen, dass die zu fügenden Bauteile unmittelbar vor dem Eintreiben des Fügehilfsteils miteinander verklebt werden. Hierbei wird ein geeigneter Klebstoff flächig auf die einander zugewandten Oberflächen der zu fügenden Bauteile aufgetragen. Die Klebeverbindung stellt hierbei die Hauptverbindung zwischen den beiden Bauteilen dar. Bei dem Klebstoff kann es sich um einen warm- oder einen kaltaushärtenden Klebstoff handeln. Der warmaushärtende Klebstoff härtet bei einer Temperatur von ca. 180°, beispielsweise in einem anschließenden Lackierprozess, aus. Dagegen härtet der kaltaushärtendene Klebstoff bei Umgebungstemperatur von ca. 20°C in etwa 24 Stunden aus. Die eingetriebenen Fügehilfsteile haben die Aufgabe eine Relatiwerschiebung der Bauteile während der Aushärtungsphase des Klebstoffes zu verhindern. Außerdem werden die Gebrauchseigenschaften der verklebten und gefügten Bauteile in einem zusätzlichen Belastungsfall, beispielsweise bei einem Fahrzeugcrash, wesentlich verbessert, da die eingetriebenen Füghilfsteile den Rissfortschritt in der Klebverbindung wirksam verhindern.

Eine andere zweckmäßige Weiterbildung des Verfahrens wird auch dadurch erreicht, wenn die zu fügenden Bauteile von dem Fügehilfsteil vollständig durchdrungen werden. Hierdurch kann die gesamte Dicke der zu fügenden Bauteile für die Verbindung mit dem Fügehilfsteil genutzt werden.

Dabei erweist es sich als besonders vorteilhaft, wenn durch einen Hinterschnitt im Bereich des Fügehilfsteils eine form- und kraftschlüssige Verbindung zwischen dem Fügehilfsteil und den zu fügenden Bauteilen gebildet wird. Hierdurch wird eine besonders feste Verbindung zwischen den Bauteilen und den Fügehilfsteilen geschaffen und die Gefahr eines unerwünschten Lösens der Fügeverbindung minimiert.

Dieser Erfindungsgedanke lässt sich dadurch ergänzen, dass sich das Fügehilfsteil beim Eintreiben in die zu fügenden Bauteile nicht verformt. Hierdurch kann gewährleistet werden, dass das Material der Bauteile in entsprechende Bereiche des Fügehilfsteils verdrängt wird. Hierdurch kann der erforderliche Kraft- und Formschluss der Verbindung prozesssicher zur Verfügung gestellt werden. Vorteilhafterweise sollten die Fügehilfsteile eine Härte von mehr als 80 HRB bzw. HRC aufweisen.

Weiterhin ist es besonders zweckmäßig, wenn die aus dem Eintreiben des Fügehilfsteils resultierenden Reaktionskräfte in einen Gegenhalter eingeleitet werden. Hierdurch können globale und lokale Verformungen im Bereich der Fügeverbindung verhindert werden. Hierbei kann der Gegenhalter auch als Matrize ausgebildet sein oder eine Matrize aufweisen.

In einer weiteren Abwandlung des vorliegenden Verfahrens wird der Gegenhalter durch einen C-Bügel gebildet, von welchem auch die aus dem Kolben und einem Antrieb bestehende Fügeeinheit getragen wird. Hierdurch wird eine kompakte Fügeeinheit geschaffen, welche aufgrund des geringen Gewichts sowohl für den handgeführten als auch für den robotergeführten Einsatz geeignet ist.

Schließlich ist es für die Prozesssicherheit besonders zweckmäßig, wenn die zu fügenden Bauteile vor dem Eintreiben des Fügehilfsteils durch einen der Fügeinheit zugeordneten Niederhalter fixiert werden. Dieser Niederhalter verhindert eine Relativverschiebung der Bauteile während des Fügevorgangs und gewährleistet ein störungsfreies Einbringen der Fügehilfsteile. Dem Niederhalter werden die Funktionselemente magaziniert, beispielsweise mittels eines Gurtbandes, eines Stangen- oder eines Schlittenmagazins zugeführt oder werden Ober einen Profilschlauch, nach vorheriger Vereinzelung, zugeschossen. Die Fixierung der Bauteile über den Niederhalter kann pneumatisch, elektromotorisch oder aber auch mechanisch, beispielsweise mittels einer Feder erfolgen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine mittels des erfindungsgemäßen Verfahrens hergestellte Verbindung zwischen zwei übereinander angeordneten Bauteilen;
- Fig. 2: eine Prinzipskizze einer Fügeinrichtung zur Durchführung des erfindungsgemäßen Verfahrens in einer perspektivischen Darstellung;

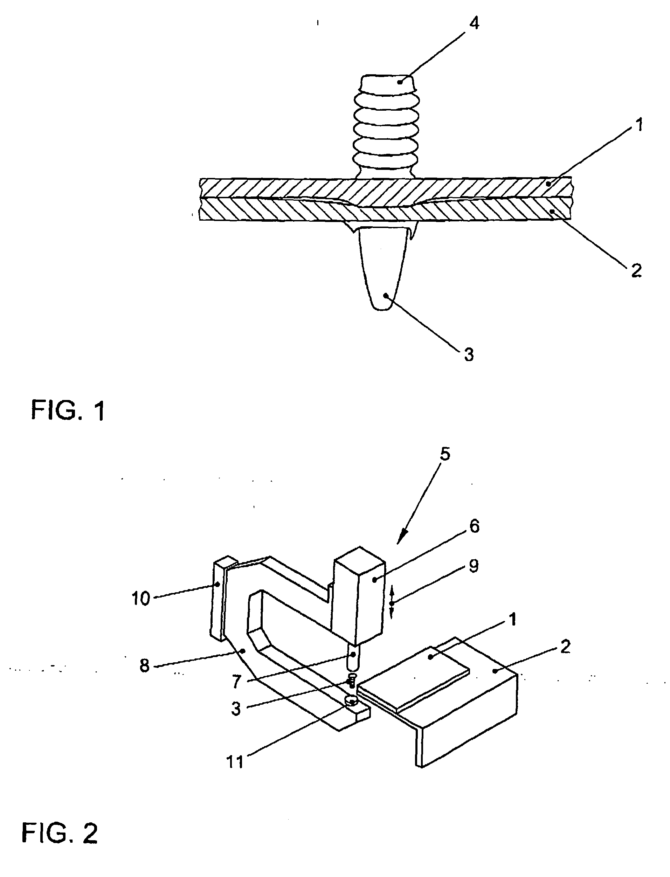

Figur 1 zeigt eine mittels des erfindungsgemäßen Verfahrens hergestellte Fügeverbindung zwischen zwei zumindest abschnittsweise übereinander angeordneten Bauteilen 1, 2. Hierbei wurde ein als Gewindebolzen ausgebildetes Fügehilfsteil 3 mittels Druckluft in die Bauteile 1, 2 eingetrieben und bildet mit den beiden Bauteilen 1, 2 eine form- und kraftschlüssige Verbindung. Das Fügehilfsteil 3 durchdringt die beiden Bauteile 1, 2 vollständig. In dem Bereich des Gewindes 4 des Fügehilfsteiles 3 können in nachfolgenden Arbeitsschritten zusätzliche Bauelemente montiert werden. Die Bauteile können als Bleche, Tafeln, oder Bänder ausgebildet sein, wobei zumindest eines der Bauteile auch als Blechhohlprofil bzw. Hohlprofil ausgebildet sein kann.

Figur 2 zeigt eine Prinzipskizze einer Fügeeinrichtung 5 zur Durchführung des erfindungsgemäßen Verfahrens. Die aus dem Antrieb 6 und dem Niederhalter 7 bestehende Fügeinrichtung 5 ist an einem C-Bügel 8 angeordnet und relativ zu diesem verschiebbar, was durch den Doppelpfeil 9 dargestellt ist. Der C-Bügel 8 weist ein Anschlusselement 10 zur Anbindung an einen nicht dargestellten Roboter auf. Während des erfindungemäßen Verfahrens wird das dem Niederhalter 7 zugeführte Fügehilfsteil 3 durch einen mit Druckluft beaufschlagten Kolben oder Fügedom in die beiden Bauteile 1, 2 eingetrieben. Während dieses hochdynamischen Fügeprozesses durchdringt das Fügehilfsteil 3 die beiden zu fügenden Bauteile 1, 2 vollständig. Die Bauteile 1, 2 und das Fügehilfsteil 3 bilden eine form- und kraftschlüssige Verbindung. Über eine Matrize 11, den Gegenhalter, werden die Reaktionskräfte des Fügevorgangs in den C-Bügel 8 eingeleitet. Die Matrize 11 kann als Form- oder Stanzmatrize aber auch als Amboss ausgebildet sein.

## Patentansprüche

1. Verfahren zum Fügen von zwei zumindest abschnittsweise übereinander angeordneten Bauteilen (1, 2), insbesondere Karosseriebauteilen, bei welchem ein Fügehilfsteil (3) durch einen mit Druckluft beaufschlagten Kolben in die beiden Bauteile (1, 2), diese zumindest teilweise durchdringend, eingetrieben wird, wobei die Kolbenbewegung mechanisch und/oder elektronisch begrenzt wird, **dadurch gekennzeichnet, dass** zumindest eines der Bauteile (1, 2) einen hochfesten Stahl, insbesondere mit einer Zugfestigkeit von mehr als 800 N/mm², aufweist, und 2 die Druckluft den Kolben mit einer Geschwindigkeit von mehr als 10m/s beweget.

2. Verfahren nach Anspruch 1, **dadurch gekennzeichnet, dass** das zweite Bauteil (1, 2) aus einem Leichtmetall oder einem Kunststoff besteht.

3. Verfahren nach den Ansprüchen 1 oder 2, **dadurch gekennzeichnet, dass** die zu fügenden Bauteile (1, 2) unmittelbar vor dem Eintreiben des Fügehilfsteils (3) miteinander verklebt werden.

4. Verfahren nach zumindest einem der vorangehenden Ansprüche, **dadurch gekennzeichnet, dass** die zu fügenden Bauteile (1, 2) von dem Fügehilfsteil (3) vollständig durchdrungen werden.

5. Verfahren nach zumindest einem der vorangehenden Ansprüche, **dadurch gekennzeichnet, dass** durch einen Hinterschnitt im Bereich des Fügehilfsteils (3) eine form- und kraftschlüssige Verbindung zwischen dem Fügehilfsteil (3) und den zu fügenden Bauteilen (1, 2) gebildet wird.

6. Verfahren nach zumindest einem der vorangehenden Ansprüche, **dadurch gekennzeichnet, dass** sich das Fügehilfsteil (3) beim Eintreiben in die zu fügenden Bauteile (1, 2) nicht verformt.

7. Verfahren nach zumindest einem der vorangehenden Ansprüche, **dadurch gekennzeichnet, dass** die aus dem Eintreiben des Fügehilfsteils (3) resultierenden Reaktionskräfte in einen Gegenhalter eingeleitet werden.

8. Verfahren nach Anspruch 7, **dadurch gekennzeichnet, dass** der Gegenhalter durch einen C-Bügel (8) gebildet wird, von welchem auch die aus dem Kolben und einem Antrieb (6) bestehende Fügeeinheit (5) getragen wird.

9. Verfahren nach zumindest einem der vorangehenden Ansprüche, **dadurch gekennzeichnet, dass** die zu fügenden Bauteile (1, 2) vor dem Eintreiben des Fügehilfsteils (3) durch einen der Fügeeinheit (5) zugeordneten Niederhalter (7) fixiert werden.

## Claims

1. Method for joining two components (1, 2), in particular body sections, which are arranged one above the other at least in sections, in which method an auxiliary joining part (3) is driven by means of a piston, which is acted on with compressed air, into the two components (1, 2) so as to penetrate at least partially through said components (1, 2), with the piston movement being mechanically and/or electronically limited, **characterized in that** at least one of the components (1, 2) has a high-strength steel, in particular with a tensile strength of more than 800 N/mm², and the compressed air moves the piston with a speed of greater than 10 m/s.

2. Method according to Claim 1, **characterized in that** the second component (1, 2) is composed of a light metal or a plastic.

3. Method according to one of Claims 1 or 2, **characterized in that** the components (1, 2) which are to be joined are adhesively bonded to one another directly before the auxiliary joining part (3) is driven in.

4. Method according to at least one of the preceding claims, **characterized in that** the auxiliary joining part (3) penetrates completely through the components (1, 2) which are to be joined.

5. Method according to at least one of the preceding claims, **characterized in that** a form-fitting and force-fitting connection between the auxiliary joining part (3) and the components (1, 2) which are to be joined is formed by an undercut in the region of the auxiliary joining part (3).

6. Method according to at least one of the preceding claims, **characterized in that** the auxiliary joining part (3) is not deformed as it is driven into the components (1, 2) which are to be joined.

7. Method according to at least one of the preceding claims, **characterized in that** the reaction forces which result from the auxiliary joining part (3) being driven in are introduced into a brace.

8. Method according to Claim 7, **characterized in that** the brace is formed by a C-shaped bracket (8) which also supports the joining unit (5) composed of the piston and a drive (6).

9. Method according to at least one of the preceding claims, **characterized in that** the components (1, 2) which are to be joined are fixed, before the auxiliary joining part (3) is driven in, by means of a holding-down device (7) which is assigned to the joining unit (5).

## Revendications

1. Procédé pour l'assemblage de deux composants (1, 2) disposés au moins en partie l'un sur l'autre, notamment des composants de carrosserie, dans lequel une pièce auxiliaire d'assemblage (3) est enfoncée par un piston sollicité avec de l'air comprimé dans les deux composants (1, 2), en traversant ceux-ci au moins partiellement, le déplacement du piston étant limité mécaniquement et/ou électroniquement, **caractérisé en ce qu'**au moins l'un des composants (1, 2) présente un acier de grande résistance, notamment avec une résistance à la traction supérieure à 800 N/mm², et l'air comprimé déplace le piston à une vitesse de plus de 10 m/s.

2. Procédé selon la revendication 1, **caractérisé en ce que** le deuxième composant (1, 2) se compose d'un métal léger ou d'un plastique.

3. Procédé selon les revendications 1 ou 2, **caractérisé en ce que** les composants à assembler (1, 2) sont collés l'un à l'autre directement avant l'enfoncement de la pièce auxiliaire d'assemblage (3).

4. Procédé selon au moins l'une quelconque des revendications précédentes, **caractérisé en ce que** les composants à assembler (1, 2) sont complètement traversés par la pièce auxiliaire d'assemblage (3).

5. Procédé selon au moins l'une quelconque des revendications précédentes, **caractérisé en ce qu'**une connexion par engagement par force et par adhérence est réalisée par une contre-dépouille dans la région de la pièce auxiliaire d'assemblage (3) entre la pièce auxiliaire d'assemblage (3) et les composants à assembler (1, 2).

6. Procédé selon au moins l'une quelconque des revendications précédentes, **caractérisé en ce que** la pièce auxiliaire d'assemblage (3) ne se déforme pas lors de son enfoncement dans les composants à assembler (1, 2).

7. Procédé selon au moins l'une quelconque des revendications précédentes, **caractérisé en ce que** les forces de réaction résultant de l'enfoncement de la pièce auxiliaire d'assemblage (3) sont introduites dans une contre-butée.

8. Procédé selon la revendication 7, **caractérisé en ce que** la contre-butée est formée par un étrier en forme de C (8), qui porte aussi l'unité d'assemblage (5) constituée du piston et d'un entraînement (6).

9. Procédé selon au moins l'une quelconque des revendications précédentes, **caractérisé en ce que** les composants à assembler (1, 2) sont fixés avant l'enfoncement de la pièce auxiliaire d'assemblage (3) par un serre-flan (7) associé à l'unité d'assemblage (5).
